# NOUVEAU FASCICULE DE BREVET EUROPEEN

(11) **EP 0 880 569 B2**
(45) Date de publication et mention de la décision concernant l'opposition: **02.03.2005**
(45) Mention de la délivrance du brevet: 15.12.1999
(21) Numéro de dépôt: 97946966.5
(22) Date de dépôt: 25.11.1997
(51) Int. Cl.: C09K 17/40

(54) **COMPOSITIONS DE TRAITEMENT DE SOLS, LEUR PROCEDE DE PREPARATION ET LEUR UTILISATION**
ZUSAMMENSETZUNGEN FÜR BODENBEHANDLUNG, VERFAHREN ZU DEREN HERSTELLUNG UND VERWENDUNG
COMPOSITIONS FOR TREATING SOILS, METHOD OF PREPARATION AND USE THEREOF

(30) Priorité: 26.11.1996 BE 9600987
(43) Date de publication de la demande: 02.12.1998
(73) Titulaire: S.A. LHOIST RECHERCHE ET DEVELOPPEMENT, 1342 Ottignies-Louvain-La-Neuve (BE)
(72) Inventeur: LAUDET, Alain, B-5000 Namur (BE); VAN TICHELEN, Etienne, B-4520 Wanze (BE); PUIATTI, Daniel, Antoine, Angel, F-93250 Villemomble (FR); DESTEXHE, Lucien, Marie, Louis, Joseph, B-4540 Amay (BE)
(74) Mandataire: Claeys, Pierre
(86) Numéro de dépôt international: PCT/BE1997/000130
(87) Numéro de publication internationale: WO 1998/023705

(56) Documents cités:
- EP-A- 0 320 987
- EP-A- 0 406 903
- WO-A-95/00031
- WO-A-96/00199
- DD-A- 99 174
- DE-A- 1 667 178
- FR-A- 2 709 766
- FR-A- 2 719 053
- JP-A- 50 053 538
- JP-A- 56 059 701
- JP-A- 80 037 521
- JP-B- 6 219 804
- JP-B- 6 322 357
- JP-B- 8 073 252
- JP-B- 49 111 882
- JP-B- 55 037 521
- JP-B- 60 014 917
- JP-B- 61 053 172
- US-A- 3 620 972
- US-A- 3 876 439
- US-A- 3 913 637
- US-A- 3 980 489
- US-A- 3 980 490
- US-A- 4 276 308
- US-A- 4 469 612
- US-A- 5 235 070
- US-A- 5 362 566
- Bulletin de Liaison des Laboratoires des ponts et chaussés, No.198, Juillet-Aout 1995, Ref.3902, pages 5-12; M. Schaffner et J.-C. Valeux
- La Norme Française NFP 98-101; Encyclopédie Universalis 1999 à "pétrole

## Description

La présente invention est relative à une composition de traitement de sols, selon le préambule de la revendication 1 annexée (v. par exemple JP 06-219 804), au procédé de préparation d'une telle composition et à son utilisation.

Il est connu de traiter des sols, en particulier des sols humides, pour les assécher et les stabiliser, notamment lorsque ces sols sont destinés à servir d'assises à des grands travaux, comme la construction de chaussées, d'aires de stationnement, etc... Dans ce but, on mélange au sol un liant hydraulique en poudre ou de la chaux vive en poudre. Ces traitements comprennent un transfert de la chaux vive ou du liant hydraulique en poudre du réservoir de stockage à un véhicule d'épandage, un épandage de la poudre sur le sol à traiter, et un malaxage, par exemple par charruage, de la poudre dans le sol à traiter. Pour atteindre des conditions de transfert appropriées, il faut que la poudre utilisée soit bien fluide, c'est-à-dire qu'elle présente une granulométrie adaptée pour s'écouler librement dans des conduits où le transfert se fait couramment par voie pneumatique. Il est par ailleurs approprié de disposer d'une chaux vive ou d'un liant ayant une granulométrie suffisamment fine pour obtenir une dispersion aussi uniforme que possible dans le sol à traiter et une bonne réactivité. Habituellement on préconise par exemple pour les assises de chaussées, une granulométrie de la chaux vive qui ne dépasse pas 2 mm (voir norme française NFP 98-101).

L'emploi de telles poudres pour le traitement de sols présente toutefois un certain nombre d'inconvénients dont le principal consiste en l'émission de poussières de chaux et/ou de liants hydrauliques au cours du traitement décrit ci-dessus aussi bien pendant l'épandage que lors du charruage. En présence de vent on peut parfois observer un transport éolien du produit de traitement à plus de 20 à 30 mètres de l'emprise du chantier. Lorsque ces poussières se déposent sur des supports humides ou sur tout corps vivant non protégé, il en résulte une élévation brutale du pH (dans le cas de la chaux en particulier) ou une adhérence du produit sur ces supports à la suite d'une prise hydraulique. Les émissions de poussières précitées peuvent donc être agressives sur l'environnement (corrosions, dommages aux cultures avoisinantes,....) et avoir pour effet des traces visibles et tenaces sur les surfaces qu'elles recouvrent, ce qui est très mal perçu par exemple en milieu urbain (voir par exemple M. SCHAEFFNER et J.-C. VALEUX, Emissions de poussières de chaux et/ou de liants hydrauliques sur les chantiers de traitement de sols et de retraitement de chaussées, réalité et remèdes, Bulletin de liaison des laboratoires des Ponts et Chaussées, 198, juillet-août 1995).

On connaît des procédés de stabilisation de sols de travaux de terrassement ou d'assises routières comprenant un étalement d'un lait de chaux sur le sol à traiter. Ce type de traitement est applicable uniquement dans le cas de sols secs, par exemple dans des contrées très ensoleillées. Il est inapplicable dans le cas de sols moyennement à très humides.

On connaît par ailleurs un produit de stabilisation de sol pour des ouvrages de génie civil, comprenant de la chaux éteinte, du gypse anhydre ou hydraté et de l'eau ou une solution aqueuse contenant un agent anti-poussières (voir Derwent abstract du JP-5222366 : numéro d'accès 93-309364). Ce produit fait usage d'eau ou d'une solution aqueuse et, comme pour le lait de chaux, il n'est donc absolument pas approprié au traitement et à la stabilisation de sols moyennement à très humides comme dans le cas de la présente invention.

On connaît aussi un traitement de surface de poudre de chaux vive dans lequel on enrobe les particules de chaux vive d'un composé organique de préférence en solution dans un solvant organique. Une fois ses particules totalement enrobées, la poudre de chaux vive présente une résistance à l'humidité nettement accrue et une fluidité augmentée ce qui améliore les conditions de transport et de stockage (voir Japio abstract du JP-58180225). Toutefois, lorsqu'il est nécessaire d'employer la poudre, il faut préalablement restaurer sa réactivité intrinsèque en la chauffant pendant 10 minutes à environ 400°C. Cela ne permet manifestement pas d'envisager son application dans le but poursuivi par la présente invention.

La présente invention a pour but de mettre au point une composition de traitement et de stabilisation de sols qui réponde aux exigences des normes étatiques, tout en surmontant les inconvénients mentionnés ci-dessus, ainsi qu'un procédé de préparation d'une telle composition et son usage.

On résout ces problèmes par une composition de traitement de sols comprenant de la chaux vive, et un additif fluide non aqueux, caractérisée en ce que la chaux vive se présente sous la forme d'une poudre à particules d'une granulométrie inférieure à 2 mm, dont une partie est formée de particules fines, en ce que l'additif fluide non aqueux présente un pouvoir d'agglomération desdites particules fines et en ce que la composition destinée au traitement de sols comprend des agglomérats de particules fines qui sont formés par ledit additif fluide non aqueux et qui libèrent les particules fines en présence d'humidité. Avantageusement, la composition présente une distribution granulométrique dans laquelle les particules inférieures à 32 µm représentent moins de 30% de la composition totale, avantageusement moins de 20% de celle-ci, de préférence moins de 10% de celle-ci. De préférence aussi la composition présente une distribution granulométrique dans laquelle les particules supérieures à 1mm représentent moins de 20% de la composition totale, avantageusement moins de 10% et de préférence moins de 1% de celle-ci.

Par chaux vive, il faut entendre suivant l'invention les chaux obtenues par cuisson de matériaux calcaire. Une chaux vive contient essentiellement de l'oxyde de calcium, parfois une faible teneur d'oxyde de magnésium.

Les chaux vives habituellement utilisées présentent généralement plus de 50%, parfois même plus de 60% de particules inférieures à 32 µm. L'application à la composition en poudre d'un additif non aqueux, comme suivant l'invention, réduit de moitié, dans certains cas de plus de 10 fois, parfois de 30 fois, cette fraction de particules inférieures à 32 µm, tout en conservant dans approximativement les mêmes proportions les fractions granulométriques supérieures. Il en résulte une nette réduction de rémission de poussières, sans influence désavantageuse sur la capacité d'écoulement du produit et sa réactivité.

Suivant une forme de réalisation avantageuse de l'invention, ledit additif est hydrophobe et perd son pouvoir d'agglomération lors d'une hydratation d'au moins une partie de la chaux vive. Par conséquent en présence de l'humidité du sol à traiter et stabiliser, les particules les plus fines sont libérées et bien distribuées dans le sol, alors qu'elles ne sont plus en état d'être dispersées par exemple par un vent latéral. on peut obtenir ainsi un produit tout aussi efficace et à action aussi uniforme dans le sol que les produits connus, actuellement mis en oeuvre, à base exclusivement de chaux vive ou de liant hydraulique, sans les inconvénients déjà mentionnés de ces derniers.

Suivant une forme particulière de l'invention, ledit additif est évaporable au moins partiellement à une température de réaction entre la chaux vive et de l'eau. Ainsi qu'il est connu, la chaux vive présente une réaction exothermique avec l'eau. Après mélange de la composition suivant l'invention avec un sol, l'humidité de celui-ci réagit avec la chaux vive, en dégageant de la chaleur. Cette chaleur peut aider à l'évaporation à l'air libre de l'additif fluide non aqueux qui libère alors les particules les plus fines, temporairement agglomérées par lui dans le produit stocké.

L'additif suivant l'invention est de préférence un composé choisi parmi le groupe comprenant des huiles minérales et des polyoléfines, et leurs mélanges. comme huile minérale, la composition suivant l'invention peut comprendre une huile minérale blanche, qui de préférence est dépourvue ou quasiment dépourvue de fraction aromatique et de composés polynucléaires.

Des formes de réalisation de compositions suivant l'invention sont indiquées en particulier dans les revendications 1 à 17.

L'invention a également pour but un procédé de préparation d'une composition de traitement et de stabilisation de sols.

Suivant un mode de réalisation de l'invention, ce procédé peut comprendre un broyage de chaux vive en une fine poudre, une addition de l'additif fluide à la poudre et un malaxage de la composition obtenue. Au cours de ce malaxage, il se produit par l'intermédiaire de l'additif fluide non aqueux une agglomération temporaire des particules les plus fines de la composition, agglomération qui va de préférence disparaitre après l'épandage, notamment par une hydratation de la chaux qui donne lieu à une perte du pouvoir d'agglomération de l'additif suivant l'invention.

Suivant un autre mode de réalisation de l'invention, le procédé peut comprendre une addition de l'additif fluide à la chaux vive et un broyage de la chaux vive en une poudre pendant ou après ladite addition, avec malaxage simultané. Ce procédé présente l'avantage d'un broyage et malaxage en une seule étape.

Si, à la température ambiante, l'additif fluide est un peu trop visqueux, on peut prévoir un chauffage de celui-ci préalablement à son addition. On peut considérer que la viscosité cinématique de l'additif fluide au moment de son addition ne doit de préférence pas dépasser 20 centipoises et même de préférence 15 centipoises. Une addition à 40°C peut être envisagée par exemple.

L'invention concerne également une utilisation d'une composition telle que décrite ci-dessus pour sa mise en oeuvre dans le traitement et la stabilisation de sols, en particulier de sols moyennement à très humides, par exemple des sols humides argileux, limoneux ou crayeux. On fera usage de telles compositions par exemple pour la réalisation de remblais, d'assises pour travaux routiers ou aires de stationnement, le retraitement d'anciennes chaussées, la formation de plates-formes industrielles, la création d'une voirie de lotissement en zone urbaine ou agricole.

D'autres détails et particularités de l'invention ressortiront de la description donnée ci-après d'exemples de réalisation non limitatifs.

### Exemple 1

10 g d'huile minérale blanche ont été pulvérisés sur 1 kg de chaux vive à usage routier. Le mélange a ensuite été malaxé pendant 10 minutes dans un mélangeur à bol de laboratoire (mélangeur Hobart).

L'huile minérale blanche est un mélange d'alcanes et de cycloalcanes à concurrence respectivement de 68 et 32 % avec une teneur en aromatiques inférieure à 1 ppm et en polynucléaires inférieure à 1 ppb. Son poids moléculaire moyen est compris entre 340 et 360. Sa viscosité cinématique à 40°C est de 15 centipoises.

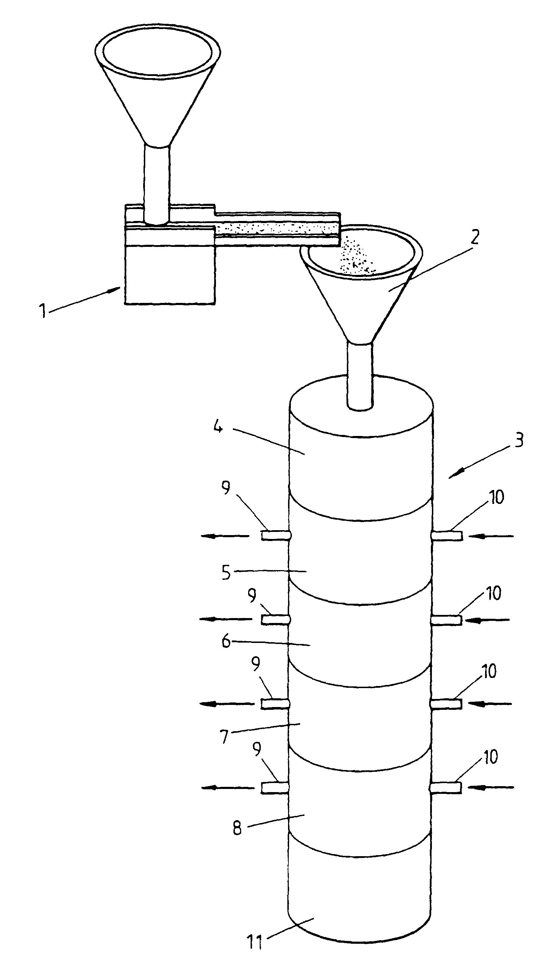

Le banc d'essai utilisé au laboratoire pour mesurer l'émission de poussières est représenté à la figure unique annexée. Il comprend :
- un doseur vibrant 1, connu dans la technique,
- un entonnoir 2,
- une colonne 3 d'éléments cylindriques empilables, dont le supérieur 4 supporte l'entonnoir 2, les quatres suivants 5-8 étant pourvus chacun d'un raccord 9 relié à un aspirateur non représenté via un collecteur, et d'un raccord 10 servant de prise d'air,
- un réceptacle 11, placé au bas de la colonne 3 (diamètre de 200 mm),
- ledit aspirateur,
- deux vannes non représentées pour régler la dépression d'air, et
- un manomètre en U également non représenté.

Ce dispositif permet de simuler la chute de la chaux en présence d'un vent latéral qui est créé par la mise sous dépression du dispositif (100 mm de colonne d'eau). On détermine, après chute, le poids de poudre collecté au bas de la colonne 3 et, par conséquent, le pourcentage de chaux emportée par le déplacement d'air.

Après chute d'un kilo de la chaux vive non traitée, on a récupéré 897 g de chaux dans le réceptacle 11, ce qui correspond à une perte de 10,3 %. Lors d'un essai identique avec de la chaux vive après traitement suivant l'invention, on récupère après chute 948 g, soit une perte de 5,2 %. Le traitement a donc abouti à une réduction du taux d'émission de poussières de ± 50%. La distribution granulométrique de la chaux non traitée et de la chaux traitée, mesurée par tamisage sous dépression d'air (équipement de construction Alpine), ainsi que leurs réactivités figurent dans le tableau ci-dessous :

| Distribution granulométrique | Chaux non traitée | Chaux traitée |
|---|---|---|
| <32 µm | 47,8% | 7,4% |
| 32-45 µm | 6% | 17,8% |
| 45-63 µm | 5,2% | 9,2% |
| 63-90 µm | 6,2% | 16,4% |
| 90-160 µm | 11,4% | 19,4% |
| 160-250 µm | 7,2% | 7,4% |
| 250-500 µm | 11,8% | 14,6% |
| 0,5-1 mm | 4,2% | 6,2% |
| >1 mm | 0,2% | 1,6% |
| Réactivité | 6,3 minutes | 7,3 minutes |

La détermination de la réactivité des chaux est basée sur l'exothermicité de la réaction d'hydratation de la chaux vive; elle consiste à mesurer l'élévation de la température en fonction du temps. Ces mesures sont réalisées selon la norme DIN 1060 (Part 3- méthode d'essai 10) de 1982. Les résultats sont exprimés comme le temps nécessaire, à compter du début de la réaction d'hydratation de 150g de chaux vive avec 600g d'eau, pour atteindre la température de 60°C, la température initiale étant de 20°C.

### Exemple 2

10 g de poly-alpha-oléfine (Nextbase 2002 de NESTE) ont été pulvérisés sur 1 kg de chaux vive à usage routier. Le mélange a ensuite été malaxé pendant 10 minutes dans un mélangeur à bol de laboratoire (mélangeur Hobart). Avant traitement le pourcentage d'émission de poussières mesuré par le test de chute au laboratoire décrit à l'exemple 1 est de 11,1%. Il est de 5,3% pour la chaux traitée, soit une réduction de poussières de ± 52%. La distribution granulométrique de la chaux non traitée et de la chaux traitée ainsi que leurs réactivités figurent dans le tableau ci-dessous :

| Distribution granulométrique | Chaux non traitée | Chaux traitée |
|---|---|---|
| <32 µm | 51,2% | 6% |
| 32-45 µm | 5,2% | 15,2% |
| 45-63 µm | 6,4% | 9,6% |
| 63-90 µm | 6,8% | 23,6% |
| 90-160 µm | 12,4% | 20,8% |
| 160-250 µm | 7.2% | 6,4% |
| 250-500 µm | 8% | 13,6% |
| 0,5-1 mm | 2,8% | 4,4% |
| >1mm | 0% | 0,4% |
| Réactivité | 6,7 minutes | 7,4 minutes |

### Exemple 3

10 g de poly-intra-oléfine (MX 2101 de MIXOIL) ont été pulvérisés sur 1 kg de chaux vive à usage routier. Le mélange a ensuite été malaxé pendant 10 minutes dans un mélangeur à bol de laboratoire (mélangeur Hobart). Avant traitement, le pourcentage d'émission de poussières mesuré par le test de chute au laboratoire décrit dans l'exemple 1 est de 8,8%. Il est de 3% pour la chaux traitée, soit une réduction de poussières de ± 66%. La distribution granulométrique de la chaux non traitée et de la chaux traitée ainsi que leurs réactivités figurent dans le tableau ci-dessous :

| Distribution granulométrique | Chaux non traitée | Chaux traitée |
|---|---|---|
| <32 µm | 55,6% | 8% |
| 32-45 µm | 4% | 12% |
| 45-63 µm | 5% | 9,6% |
| 63-90 µm | 5,8% | 22,4% |
| 90-160 µm | 9,8% | 24% |
| 160-250 µm | 6,8% | 7,2% |
| 250-500 µm | 9,2% | 11,2% |
| 0,5-1 mm | 3,6% | 4,8% |
| >1 mm | 0,2% | 0,8% |
| Réactivité | 6,7 minutes | 7 minutes |

### Exemple 4

Une tonne de chaux vive à usage routier a été traitée dans un mélangeur-granulateur industriel du type zigzag, équipé de barres de dispersion et de couteaux (GRC 300 de construction GMV Impianti/ltalie). Une huile minérale blanche, telle que décrite dans l'exemple 1, a été dosée, à raison de 1%, au moyen d'une pompe volumétrique et dispersée dans la masse de la chaux par l'action de la force centrifuge de la rotation des couteaux. Le pourcentage d'émission de poussières mesuré par le test de chute en laboratoire de l'exemple 1 est de 8,1% avant traitement de la chaux et de 3,4% pour la chaux traitée, soit une réduction de poussières de ± 58%. La distribution granulométrique de la chaux non traitée et de la chaux traitée ainsi que leurs réactivités figurent dans le tableau ci-dessous :

| Distribution granulométrique | Chaux non traitée | Chaux traitée |
|---|---|---|
| <32 µm | 57,8% | 2,6% |
| 32-45 µm | 4,8% | 4,4% |
| 45-63 µm | 4,4% | 3,8% |
| 63-90 µm | 5% | 9% |
| 90-160 µm | 8,8% | 22% |
| 160-250 µm | 5,8% | 14,7% |
| 250-500 µm | 9,2% | 8,1% |
| 0,5-1 mm | 3,8% | 25% |
| >1 mm | 0,4% | 10,4% |
| Réactivité | 4 minutes | 5,6 minutes |

### Exemple 5

Trente tonnes de chaux vive de calibre 5-15 mm ont été broyées dans une installation industrielle comprenant à l'entrée un broyeur à marteaux équipé d'une rampe d'arrosage. L'additif (huile minérale blanche) a été injecté sur la chaux à l'entrée du broyeur, à raison de 13 kg par tonne de chaux. On obtient après broyage une chaux à usage routier à granulométrie inférieure à 2 mm. Ce produit est ensuite homogénéisé au cours de son transport par vis en cascades vers le silo de stockage. Le pourcentage d'émission de poussières mesuré par le test de chute au laboratoire est de 8,5% avant traitement et de 4,2% pour la chaux traitée, soit une réduction de poussière de ± 50%. La distribution granulométrique de la chaux non traitée et de la chaux traitée ainsi que leurs réactivités figurent dans le tableau ci-dessous :

| Distribution granulométrique | Chaux non traitée | Chaux traitée |
|---|---|---|
| <32 µm | 55,2% | 2,2% |
| 32-45 µm | 4% | 9,4% |
| 45-63 µm | 5,6% | 3,4% |
| 63-90 µm | 5,6% | 8,6% |
| 90-160 µm | 9,6% | 30,2% |
| 160-250 µm | 7,2% | 8,4% |
| 250-500 µm | 9,2% | 18,6% |
| 0,5-1 mm | 3,6% | 13,6% |
| >1 mm | 0% | 5,6% |
| Réactivité | 3,45 minutes | 4,3 minutes |

Une mesure comparative de l'émission de poussières au cours de l'épandage sur chantier de la chaux vive de qualité routière traitée et de celle non traitée a été réalisée par le Centre technique des Industries Aérauliques et Thermiques (CETIAT, 69604 Villeurbanne/France). La détermination du niveau moyen d'émission de poussières en bordure du site d'épandage consiste à aspirer et filtrer un volume d'air connu et ensuite à peser le filtre collecteur. La concentration en poussières est définie comme le rapport de la masse des particules solides retenues par le filtre et le volume d'air prélevé. Elle est exprimée en mg/m³ d'air. Les différents prélèvements ont été réalisés à une hauteur comprise entre 1 et 1,5 m, à l'aide d'appareillages conformes à la norme française NF X 43-021 relative au "Prélèvement sur filtre de matières particulaires en suspension dans l'air ambiant". Ces mesures ont démontré que la concentration en poussières lors de l'épandage de la chaux vive traitée était au moins dix fois inférieure à celle mesurée lors de l'épandage de la chaux non traitée. Dans l'exemple réalisé, on a obtenu en présence d'un vent latéral de 3 m par seconde, une concentration moyenne jusqu'à 20 m de la zone d'épandage qui est comprise entre 45 et 50 mg/Nm³ pour la chaux non traitée, alors qu'on obtient dans les mêmes conditions une moyenne de l'ordre de 3 mg/Nm³ pour la chaux traitée suivant l'invention.

### Exemple 6

Trente tonnes de chaux vive à usage routier ont été broyées et traitées dans l'installation et selon les conditions décrites dans l'exemple 5 mais avec une addition d'huile minérale blanche à raison de 6 kg par tonne de chaux. Le pourcentage d'émission de poussière mesuré par le test de chute au laboratoire est de 10,1% avant traitement et de 4,4% pour la chaux traitée, soit une réduction de poussière de + 55%. La distribution granulométrique de la chaux non traitée et de la chaux traitée ainsi que leurs réactivités figurent dans le tableau ci-dessous :

| Distribution granulométrique | Chaux non traitée | Chaux traitée |
|---|---|---|
| <32 µm | 48,6% | 2,8% |
| 32-45 µm | 6, 2% | 6, 2% |
| 45-63 µm | 4,6% | 5,8% |
| 63-90 µm | 5,2% | 11,8% |
| 90-160 µm | 10,6% | 32,2% |
| 160-250 µm | 8,6% | 9,6% |
| 250-500 µm | 11,6% | 17,2% |
| 0,5-1 mm | 4,4% | 12,2% |
| >1 mm | 0.2% | 2,2% |
| Réactivité | 3,9 minutes | 4,1 minutes |

Comme on peut le constater dans tous ces exemples 1 à 6, il y a une diminution nette des fractions granulométriques les plus fines des compositions traitées, et un maintien ou une augmentation non significative des fractions granulométriques les plus épaisses. Par contre on observe une augmentation nette des fractions granulométriques moyennes : de 63 à 160 µm, éventuellement à 250 µm pour la chaux vive.

Cette modification dans les proportions granulométriques n'a pas d'incidence réelle sur la réactivité des chaux, ni sur leur capacité d'écoulement.

Comme on va le voir dans l'exemple 7 ci-dessous les effets de la chaux vive sur les sols naturels ne sont pas non plus affectés par le traitement suivant l'invention de ces chaux.

### Exemple 7

Des études ont été réalisées en laboratoire pour déterminer l'incidence du traitement anti-poussières sur les propriétés d'une chaux vive routière dont les particules présentent une granulométrie inférieure à 2 mm, conformément à la norme francaise NF P 98-101 (juin 1991). Après caractérisation de la chaux avant et après traitement suivant l'invention, les essais ont vite de la chaux, mais qu'il modifie la granulométrie apparente; la chaux traitée devient homométrlque.

Les effets sur le limon ont été mesurés au travers de l'essai IPI (Indice Portant Immédiat selon la norme française NF P 94-078 de décembre 1992) et de l'essai CBR (Californian Bearing Ratio selon la norme française NF P 94-078 de décembre 1992) après immersion de 4 jours dans l'eau. Pour chacun des deux types de chaux, deux dosages ont été réalisés : 1,5 et 3% par rapport au poids de sol sec. Les teneurs initiales du sol en eau, avant traitement, étaient de 19 et 21%, ce qui correspond à WOPN+2 et WOPN+4 (Essai Proctor Normal selon la norme française NF P 94-093 de décembre 1993).

Les résultats sont les suivants :

Quel que soit le type de chaux et toutes choses égales par ailleurs (teneur initiale en eau du sol, densité des échantillons testés et dosage en chaux) les IPI après traitement à la chaux sont nettement supérieurs à ceux mesurés avant traitement et ils atteignent des niveaux comparables, compte tenu de la dispersion de l'essai.

Quel que soit le type de chaux, les gonflements linéaires après immersion de 4 jours dans l'eau, mesurés selon la méthode CBR, sont également d'un niveau comparable et inférieurs à 0,15% dans tous les cas.

Ces essais démontrent que le traitement anti-poussières suivant l'invention ne modifie pas de manière significative les effets de la chaux vive sur les sols naturels, la portance est améliorée et les gonflements sont réduits dans les mêmes proportions, quel que soit le type de chaux.

Il doit être entendu que la présente invention n'est en aucune façon limitée aux modes de réalisation décrits ci-dessus et que bien des modifications peuvent y être apportées dans le cadre des revendications annexées.

## Revendications

1. Composition de traitement de sols comprenant de la chaux vive, et un additif fluide non aqueux, **caractérisée en ce que** la chaux vive se présente sous la forme d'une poudre à particules d'une granulométrie inférieure à 2 mm, dont une partie est formée de particules fines, **en ce que** l'additif fluide non aqueux présente un pouvoir d'agglomération desdites particules fines et **en ce que** la composition destinée au traitement de sols comprend des agglomérats de particules fines qui sont formés par ledit additif fluide non aqueux et qui libèrent les particules fines en présence d'humidité.

2. Composition de traitement de sols suivant la revendication 1, **caractérisée en ce qu'**elle présente une distribution granulométrique dans laquelle les particules inférieures à 32 µm représentent moins de 30% de la composition totale.

3. Composition de traitement de sols suivant la revendication 2, **caractérisée en ce qu'**elle présente une distribution granulométrique dans laquelle les particules inférieures à 32 µm représentent moins de 20 % de la composition totale.

4. Composition de traitement de sols suivant la revendication 2, **caractérisée en ce qu'**elle présente une distribution granulométrique dans laquelle les particules inférieures à 32 µm représentent moins de 10 % de la composition totale.

5. Composition de traitement de sols suivant la revendication 2, **caractérisée en ce qu'**elle présente une distribution granulométrique dans laquelle les particules inférieures à 32 µm représentent moins de 5 % de la composition totale.

6. Composition de traitement de sols suivant la revendication 2, **caractérisée en ce qu'**elle présente une distribution granulométrique dans laquelle les particules inférieures à 32 µm représentent moins de 3 % de la composition totale.

7. Composition de traitement de sols suivant l'une quelconque des revendications 1 à 6, **caractérisée en ce qu'**elle présente une distribution granulométrique dans laquelle les particules supérieures à mm représentent moins de 20 % de la composition totale, avantageusement moins de 10 % et de préférence moins de 1 % de celle-ci.

8. Composition suivant l'une quelconque des revendications 1 à 7, **caractérisée en ce que** ledit additif est hydrophobe et perd son pouvoir d'agglomération lors d'une hydratation d'au moins une partie de la chaux vive.

9. Composition suivant l'une quelconque des revendications 1 à 8, **caractérisée en ce que** ledit additif est évaporable au moins partiellement à une température de réaction entre la chaux vive et de l'eau.

10. Composition suivant l'une quelconque des revendications 1 à 9, **caractérisée en ce que** l'additif est un composé choisi parmi le groupe comprenant des huiles minérales et des polyoléfines, et leurs mélanges.

11. Composition suivant la revendication 10, **caractérisée en ce que**, comme huile minérale, elle comprend une huile minérale blanche, qui de préférence est dépourvue ou quasiment dépourvue de fraction aromatique et de composés polynucléaires.

12. Composition suivant la revendication 11, **caractérisée en ce que** l'huile minérale blanche comprend de 50-80 % d'alcanes et de 20-50 % de cycloalcanes.

13. Composition suivant la revendication 10, **caractérisée en ce que**, comme polyoléfine, elle comprend une polyalphaoléfine ou une polyintraoléfine.

14. Composition suivant rune quelconque des revendications 1 à 13, **caractérisée en ce qu'**elle contient une proportion limitée dudit additif fluide, de l'ordre de 0,1-5 %, de préférence d'environ 0,5-2%, par rapport au poids de la composition totale.

15. Composition suivant l'une quelconque des revendications 1 à 14, **caractérisée en ce qu'**elle comprend en outre un agent augmentant le pouvoir agglomérant de l'additif fluide.

16. Composition suivant la revendication 15, **caractérisée en ce que** ragent augmentant le pouvoir agglomérant de l'additif fluide est du polybutène.

17. Composition suivant l'une quelconque des revendications 1 à 16, comprenant de la chaux vive, **caractérisée en ce qu'**elle présente une réactivité inférieure à 25 minutes, de préférence inférieure à 10 minutes, en particulier inférieure à 5 minutes.

18. Procédé de préparation d.'une composition de traitement de sols suivant l'une quelconque des revendications 1 à 17, **caractérisé en ce qu'**il comprend un broyage de chaux vive en un fine poudre, une addition de l'additif fluide à la poudre et un malaxage de la composition obtenue.

19. Procédé de préparation d'une composition de traitement de sols suivant l'une quelconque des revendications 1 à 17, **caractérisé en ce qu'**il comprend une addition de l'additif fluide à la chaux vive et un broyage de la chaux vive en une poudre pendant ou après ladite addition, avec malaxage simultané.

20. Procédé suivant l'une ou l'autre des revendications 18 et 19, **caractérisé en ce qu'**il comprend un léger chauffage de l'additif avant son addition, pour augmenter sa fluidité et améliorer les conditions de l'étape d'addition.

21. Utilisation d'une composition suivant l'une quelconque des revendications 1 à 17, pour sa mise en oeuvre dans le traitement et la stabilisation de sols de chantiers.

## Claims

1. Composition for treating soils comprising quicklime and a non-aqueous fluid additive,
**characterized in that** the quicklime is in the form of a powder with particles having a size less than 2 mm, a portion of which consists of fine particles, the non-aqueous fluid additive has a power to agglomerate said fine particles and the composition for treating soils comprises agglomerates of fine particles which are formed by said non-aqueous fluid addition and which liberate the fine particles in presence of humidity.

2. Composition for treating soils according to claim 1, **characterized in that** it has a particle size distribution in which the particles smaller than 32 µm represent less than 30% of the total composition.

3. Composition for treating soils according to claim 2, **characterized in that** it has a particle size distribution in which the particles smaller than 32 µm represent less than 20% of the total composition.

4. Composition for treating soils according to claim 2, **characterized in that** it has a particle size distribution in which the particles smaller than 32 µm represent less than 10% of the total composition.

5. Composition for treating soils according to claim 2, **characterized in that** it has a particle size distribution in which the particles smaller than 32 µm represent less than 5% of the total composition.

6. Composition for treating soils according to claim 2, **characterized in that** it has a particle size distribution in which the particles smaller than 32 µm represent less than 3% of the total composition.

7. Composition for treating soils according to any one of claims 1 to 6, **characterized in that** it has a particle size distribution in which the particles larger than 1 mm represent less than 20% of the total composition, advantageously less than 10% thereof, and preferably less than 1% thereof.

8. Composition according to any one of claims 1 to 7, **characterized in that** the said additive is hydrophobic and loses its agglomerating power during hydration of at least part of the quicklime.

9. Composition according to any one of claims 1 to 8, **characterized in that** the said additive can be evaporated at least partially at the reaction temperature between quicklime and water.

10. Composition according to any one of claims 1 to 9, **characterized in that** the additive is a compound selected from the group comprising mineral oils and polyolefins and mixtures thereof.

11. Composition according to claim 10, **characterized in that**, as a mineral oil, it comprises white mineral oil, which is preferably free from or almost free from an aromatic fraction and polynuclear compounds.

12. Composition according to claim 11, **characterized in that** the white mineral oil comprises 50-80% alkanes and 20-50% cycloalkanes.

13. Composition according to claim 10, **characterized in that**, as a polyolefin, it includes a poly-alpha-olefin or a poly-intra-olefin.

14. Composition according to any one of claims 1 to 13, **characterized in that** it contains a limited proportion of the said fluid additive, of the order of 0.1-5%, preferably approximately 0.5-2%, based on the total weight of the composition.

15. Composition according to any one of claims 1 to 14, **characterized in that** it additionally includes an agent increasing the agglomerating power of the fluid additive.

16. Composition according to claim 15, **characterized in that** the agent increasing the agglomerating power of the fluid additive is polybutene.

17. Composition according to any one of claims 1 to 16, including quicklime, **characterized in that** it has a reactivity of less than 25 minutes, preferably less than 10 minutes, in particular less than 5 minutes.

18. Process for preparing a composition for treating soils according to any one of claims 1 to 17, **characterized in that** it comprises grinding quicklime into a fine powder, adding the fluid additive to the powder and blending the composition obtained.

19. Process for preparing a composition for treating soils according to any one of claims 1 to 17, **characterized in that** it comprises adding the fluid additive to the quicklime and grinding the quicklime into a powder during or after the said addition, with simultaneous blending.

20. Process according to either of claims 18 or 19, **characterized in that** it includes lightly heating the additive before it is added, so as to increase its fluidity and to improve the conditions of the addition step.

21. Use of a composition according to any one of claims 1 to 17, for its application in the treatment and stabilization of soils on construction sites.

## Patentansprüche

1. Zusammensetzung zur Behandlung von Böden, umfassend ungelöschten Kalk und einen nichtwäßrigen fluiden Zusatzstoff, **dadurch gekennzeichnet, daß** der ungelöschte Kalk in Form eines Pulvers aus Teilchen mit einer Korngröße von weniger als 2 mm vorliegt, von denen ein Teil aus Feinteilchen gebildet ist, daß der nichtwäßrige fluide Zusatzstoff eine Fähigkeit zur Agglomeratbildung der Feinteilchen aufweist, und daß die zur Behandlung von Böden bestimmte Zusammensetzung Feinteilchen-Agglomerate umfaßt, die durch den nichtwäßrigen fluiden Zusatzstoff gebildet werden und in Gegenwart von Feuchtigkeit die Feinteilchen freisetzen.

2. Zusammensetzung zur Behandlung von Böden nach Anspruch 1, **dadurch gekennzeichnet, daß** sie eine Korngrößenverteilung aufweist, in der die Teilchen mit einer Korngröße von weniger als 32 µm weniger als 30% der gesamten Zusammensetzung ausmachen.

3. Zusammensetzung zur Behandlung von Böden nach Anspruch 2, **dadurch gekennzeichnet, daß** sie eine Korngrößenverteilung aufweist, in der die Teilchen mit einer Korngröße von weniger als 32 µm weniger als 20% der gesamten Zusammensetzung ausmachen.

4. Zusammensetzung zur Behandlung von Böden nach Anspruch 2, **dadurch gekennzeichnet, daß** sie eine Korngrößenverteilung aufweist, in der die Teilchen mit einer Korngröße von weniger als 32 µm weniger als 10% der gesamten Zusammensetzung ausmachen.

5. Zusammensetzung zur Behandlung von Böden nach Anspruch 2, **dadurch gekennzeichnet, daß** sie eine Korngrößenverteilung aufweist, in der die Teilchen mit einer Korngröße von weniger als 32 µm weniger als 5% der gesamten Zusammensetzung ausmachen.

6. Zusammensetzung zur Behandlung von Böden nach Anspruch 2, **dadurch gekennzeichnet, daß** sie eine Korngrößenverteilung aufweist, in der die Teilchen mit einer Korngröße von weniger als 32 µm weniger als 3% der gesamten Zusammensetzung ausmachen.

7. Zusammensetzung zur Behandlung von Böden nach einem der Ansprüche 1 bis 6, **dadurch gekennzeichnet, daß** sie eine Korngrößenverteilung aufweist, in der die Teilchen mit einer Korngröße von mehr als 1 mm weniger als 20%, vorteilhafterweise weniger als 10% und vorzugsweise weniger als 1% der gesamten Zusammensetzung ausmachen.

8. Zusammensetzung nach einem der Ansprüche 1 bis 7, **dadurch gekennzeichnet, daß** der Zusatzstoff hydrophob ist und bei einer Hydratation wenigstens eines Teils des ungelöschten Kalks seine Fähigkeit zur Agglomeratbildung verliert.

9. Zusammensetzung nach einem der Ansprüche 1 bis 8, **dadurch gekennzeichnet, daß** der Zusatzstoff bei einer Reaktionstemperatur zwischen dem ungelöschten Kalk und Wasser wenigstens teilweise verdampfbar ist.

10. Zusammensetzung nach einem der Ansprüche 1 bis 9, **dadurch gekennzeichnet, daß** der Zusatzstoff eine Verbindung ist, ausgewählt aus Mineralölen und Polyolefinen sowie deren Gemischen.

11. Zusammensetzung nach Anspruch 10, **dadurch gekennzeichnet, daß** sie als Mineralöl ein weißes Mineralöl umfaßt, das vorzugsweise keine oder beinahe keine aromatische Fraktion und mehrkernige Verbindungen umfaßt.

12. Zusammensetzung nach Anspruch 11, **dadurch gekennzeichnet, daß** das weiße Mineralöl 50 bis 80% Alkane und 20 bis 50% Cycloalkane umfaßt.

13. Zusammensetzung nach Anspruch 10, **dadurch gekennzeichnet, daß** sie als Polyolefin ein Poly-α-olefin oder ein Poly-intra-olefin umfaßt.

14. Zusammensetzung nach einem der Ansprüche 1 bis 13, **dadurch gekennzeichnet, daß** sie einen begrenzten Anteil des fluiden Zusatzstoffs enthält, in der Größenordnung von 0,1 bis 5%, vorzugsweise ungefähr 0,5 bis 2%, bezogen auf das Gewicht der gesamten Zusammensetzung.

15. Zusammensetzung nach einem der Ansprüche 1 bis 14, **dadurch gekennzeichnet, daß** sie unter anderem ein Mittel umfaßt, welches die agglomerierende Fähigkeit des fluiden Zusatzstoffs steigert.

16. Zusammensetzung nach Anspruch 15, **dadurch gekennzeichnet, daß** das Mittel, welches die agglomerierende Fähigkeit des fluiden Zusatzstoffs steigert, Polybuten ist.

17. Zusammensetzung nach einem der Ansprüche 1 bis 16, umfassend ungelöschten Kalk, **dadurch gekennzeichnet, daß** sie eine Reaktivität von weniger als 25 Minuten, vorzugsweise weniger als 10 Minuten, insbesondere weniger als 5 Minuten aufweist.

18. Verfahren zur Herstellung einer Zusammensetzung zur Behandlung von Böden nach einem der Ansprüche 1 bis 17, **dadurch gekennzeichnet, daß** es Zerkleinern des ungelöschten Kalks zu einem feinen Pulver, Zugeben des fluiden Zusatzstoffs zum Pulver und Kneten der erhaltenen Zusammensetzung umfaßt.

19. Verfahren zur Herstellung einer Zusammensetzung zur Behandlung von Böden nach einem der Ansprüche 1 bis 17, **dadurch gekennzeichnet, daß** es Zugeben des fluiden Zusatzstoffs zum ungelöschten Kalk und Zerkleinern des ungelöschten Kalks zu einem Pulver während oder nach dem Zugeben unter gleichzeitigem Kneten umfaßt.

20. Verfahren nach einem der Ansprüche 18 und 19, **dadurch gekennzeichnet, daß** es leichtes Erhitzen des Zusatzstoffs vor dessen Zugabe umfaßt, wodurch sein Fließvermögen gesteigert und die Bedingungen im Zugabeschritt verbessert werden.

21. Verwendung einer Zusammensetzung nach einem der Ansprüche 1 bis 17 zur Behandlung und Stabilisation von Böden von Baustellen.
